# FASCICULE DE BREVET EUROPEEN

(11) **EP 0 314 577 B1**
(45) Date de publication et mention de la délivrance du brevet: **11.08.1993**
(21) Numéro de dépôt: 88402716.0
(22) Date de dépôt: 27.10.1988
(51) Int. Cl.: F16K 17/38

(54) **Soupape de décharge pour canalisation de transport de fluide chaud**
Druckentlastungsventil für eine Rohrleitung für ein heisses Fluid
Hot fluid pipeline relief valve

(30) Priorité: 28.10.1987 FR 8714902
(43) Date de publication de la demande: 03.05.1989
(73) Titulaire: GIRPI, Société Anonyme, F-78170 La Celle Saint-Cloud (FR)
(72) Inventeur: Baillon, Michel, F-92600 Asnières (FR); Bourjala, Robert, F-95000 Cergy (FR)
(74) Mandataire: Armengaud Ainé, Alain

(56) Documents cités:
- DE-A- 1 941 277
- GB-A- 2 076 652
- US-A- 1 878 002

## Description

L'invention concerne une soupape de décharge d'une canalisation de transport de fluide chaud (liquide ou gazeux) et elle vise plus particulièrement une soupape de sécurité visant à vidanger ou recycler automatiquement le fluide véhiculé par ladite canalisation dès lors qu'une température déterminée à l'avance comme critique aura été atteinte par ce fluide. Elle s'applique notamment à la protection des circuits de chauffage à eau chaude, ou des circuits d'air comprimé.

Ce type de soupape de décharge se trouve disposé préférentiellement entre un générateur de chaleur ou tout autre dispositif transmettant volontairement ou accidentellement de la chaleur, un compressuer à air par exemple et la partie du circuit de fluide à protéger, c'est à dire dans le cas d'un système de chauffage de locaux, sur la canalisation entre la chaudière et les convecteurs, ou sur un "by-pass" formant circuit de dérivation par rapport à la canalisation principale.

Il existe des soupapes de décharge répondant aux fonctions décrites ci-dessus et qui comprennent un ou plusieurs orifices de décharge obstrués directement ou indirectement par des éléments fusibles au-dessus d'une certaine température prédéterminée et qui en fondant libèrent l'orifice d'écoulement en permettant ainsi l'évacuation du liquide et la baisse de surpression à l'intérieur de la canalisation. Ce type de soupape faisant appel aux propriétés des alliages eutectiques présente toutefois certains inconvénients ; leur vieillissement n'est pas toujours excellent par suite de l'entartrage des surfaces fusibles, il s'en suit alors une imprécision importante quant à la température de fonctionnement avec risque de désordre pour la canalisation ; par ailleurs, le débit de décharge est parfois faible et directement fonction de la surface effectivement fondue.

D'autres soupapes de décharge fonctionnent également à l'aide d'un ressort et se basent alors sur l'augmentation de pression liée à celle de la température du fluide dans la canalisation. Or, il s'avère que le fonctionnement de tels systèmes n'est fiable que dans le cas d'utilisation d'eau comme fluide caloporteur, et à condition que l'élément à protéger est correctement rempli et purgé d'air. De plus, ce genre de soupape souffre également de mauvaises conditions de vieillissement dues à l'entartrage du ressort.

Le docoment générique DE-A 1 941 277 fait connaître un thermostat pour la commande d'un écoulement d'eau mettant en oeuvre un élément de détection de la température comportant une substance telle qu'une cire qui se dilate en réponse aux augmentations de température pour commander un élément moteur du thermostat actionnant une soupape.

US-A 1 878 002 fait connaître une soupape à décharge rapide utilisant un élément destructible constitué d'une ampoule brisable qui lors d'une variation de la température de l'air au contact duquel se trouve ladite ampoule, se rompt pour libérer le ressort de rappel d'une soupape d'obturation, permettant l'écoulement d'un liquide contenu dans une enceinte sur l'orifice de sortie de laquelle est interposée ladite soupape.

Ces systèmes ne permettent pas de réaliser une soupape de décharge répondant aux préoccupations de l'invention mentionnées ci-dessus.

L'objet de l'invention vise en conséquence à améliorer la solution connue du document générique en apportant une soupape de décharge pour canalisation de transport de fluide chaud (liquide ou gazeux) comprenant les caractéristiques de la revendication 1.

Selon une particularité de l'invention, la soupape de décharge à bulbe fonctionne selon le principe couramment utilisé pour les sprinkleurs d'extinction automatique du feu, mais dans le sens inverse. En effet, dans les sprinkleurs, le bulbe permet de retenir sous pression l'eau d'une conduite extérieure au système et qui pourra s'écouler par aspersion sur le feu dès que la température de l'air ambiant sera suffisamment élevée pour faire éclater ledit bulbe par dilatation excessive du liquide contenu (de l'alcool par exemple). Dans la présente invention par contre, le bulbe qui se trouve en contact direct avec le fluide chaud véhiculé obstrue l'orifice de décharge et ne laisse s'évacuer le fluide chaud vers l'extérieur dela canalisation à protéger que lorsque la dilatation par échauffement de température du liquide contenu dans le bulbe est suffisante pour faire éclater ce dernier et libérer ainsi l'orifice de décharge.

Ainsi, un tel système particulièrement simple de conception permet d'éviter toute surchauffe de température en aval du générateur ou de tout autre dispositif transmettant volontairement ou accidentellement de la chaleur, un compresseur à air par exemple.

D'autres caractéristiques et avantages de l'invention ressortiront de la description qui va suivre, donnée à titre d'exemple non limitatif et en regard des dessins annexés, sur lesquels :
- La figure 1 est un schéma général d'un montage de chauffage central muni d'une soupape de décharge en Té conforme à la présente invention ;
- La figure 2 est une coupe d'un mode de réalisation d'une soupape suivant l'invention, le bulbe étant intact et faisant office de cale-obturateur.
- La figure 3 et une vue similaire à la figure 2, mais le bulbe étant cassé et le liquide véhiculé dans la canalisation de transport en cours d'évacuation.

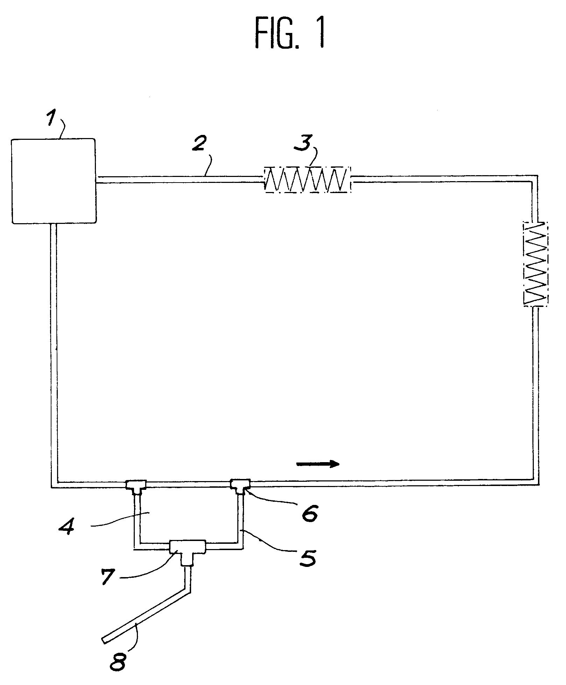

Comme représenté sur la figure 1, sur une installation de chauffage central comprenant une chaudière (1), une canalisation de transport du fluide chaud (2), des convecteurs (3), on a prévu un circuit de dérivation (4) ou by-pass à partir de tuyaux (5) et raccords (6) ainsi que d'une soupape de décharge en Té (7) à laquelle est reliée une conduite d'evacuation ou de recyclage (8) faisant office de déversoir en cas d'accident sur la canalisation principale (2).

De préférence, les tubes-raccords-corps de la soupape de décharge sont constitués de matières thermoplastiques résistant aux hautes températures (> 60°C) telles que le PVCC, le PVDF, le Polyéthylène réticulé, le polypropylène ou similaires mais on peut également utiliser sans faire novation du métal ou des alliages de métaux.

L'utilisation de la soupape de décharge en Té permet de protéger les éléments de transport et/ou de diffusion du fluide chaud contre toute surcharge accidentelle. Cet agencement est surtout appréciable dès lors que toute ou partie de la canalisation ou des convecteurs fait appel aux plastiques techniques décrits précédemment.

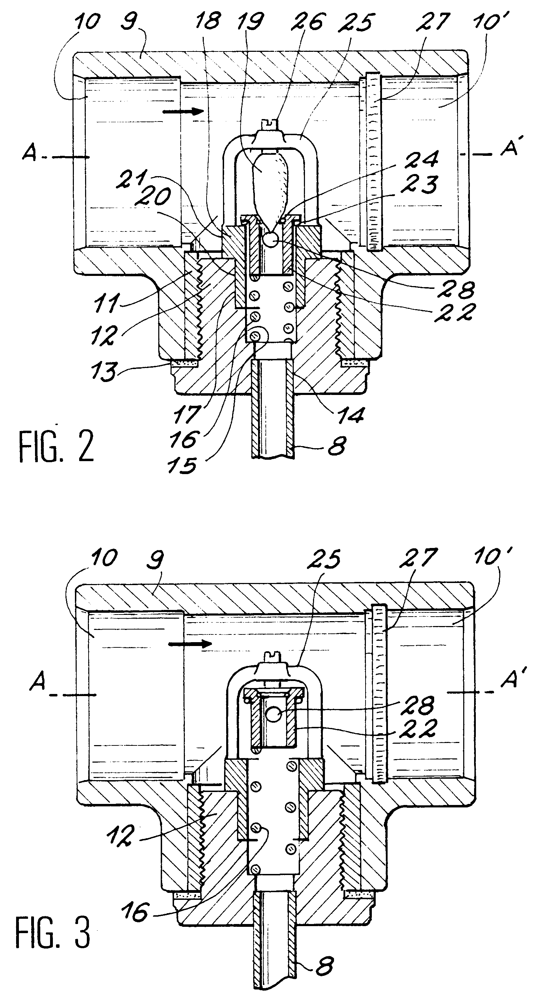

Comme représenté sur la figure 2, la soupape de décharge en Té est composée d'un corps (9) muni de deux emboîtures opposées (10, 10′) adaptées pour recevoir les tuyaux du circuit de dérivation. Dans le présent exemple, les emboîtures sont femelles mais l'on pourrait envisager des emboîtures mâles emboîtables sur les tulipes femelles correspondantes des tuyaux (5). Le troisième orifice disposé perpendiculairement par rapport à l'axe médian (A-A′) passant par le centre des deux emboîtures (10-10′) est doté dans son emboîture d'un filetage (11) façonné ou collé, sur lequel on vient visser un bouchon fileté (12) muni d'un pas de vis correspondant. Un joint (13) en néoprène ou similaire permet de parachever l'étanchéité au niveau du filetage. Du centre de la cloison externe du bouchon et en direction de l'axe médian (A-A′) partent trois chambres successives. La plus petite (14) disposée en contact avec l'extérieur du Té, constitue une emboîture femelle pour la conduite d'évacuation (8). Elle est suivie à mi-épaisseur du bouchon fileté (12) par une deuxième chambre (15) un peu plus large et destinée à recevoir un ressort en acier inoxydable (16) qui n'est pas en contact avec le fluide. Une troisième chambre (17) encore plus large suit cette chambre intermédiaire et sert à recevoir un support (18) à bulbe (19) fermement maintenu par collage notamment.

Le support (18) présente la forme d'une bague (20) adaptée au diamètre précis de la troisième chambre et munie à sa base d'une couronne circulaire (21) plus large venant en butée contre la paroi interne du bouchon (12). Dans cette couronne (21) l'on a monté coulissant un clapet cylindrique creux (22) muni de deux joints d'étanchéité (23-24), l'un (23) assurant l'étanchéité entre le clapet (22) et la couronne (21), l'autre (24) l'étanchéité entre le passage cyindrique à l'intérieur du clapet et le bulbe (19). Ce dernier constitué d'une enveloppe en verre remplie d'un liquide expansible à la chaleur du type alcool est maintenu fermement contre le joint (24) à l'aide d'un étrier (25) muni éventuellement d'une vis de réglage (26) et fixé à la couronne circulaire (21) du support (18). Grâce à cet agencement le bulbe (19) assure la double fonction de cale pour le clapet (22) et d'obturateur de la conduit d'évacuation 8.

Lors d'un échauffement anormal du système de chauffe et comme représenté sur la figure 3 le bulbe (19), réalisé généralement en verre, se brise par dilatation de l'alcool contenu, ce qui permet de libérer l'orifice d'évacuation central, perpendiculaire à l'axe A-A′ du clapet (22), et d'autoriser le fluide à s'évacuer à travers le centre du bouchon (12) en direction de la conduite d'évacuation ou de recyclage (8).

Il peut toutefois se produire que lors du bris du bulbe (19), toute ou partie de l'enveloppe contenant de l'alcool et en contact avec le milieu du clapet, demeure en place du fait de la pression interne du fluide chaud et continue à obstruer l'évacuation. Pour pallier à cet éventuel inconvénient, il a été prévu que lors du bris du bulbe (19), le ressort (16) fasse coulisser le clapet (22) vers l'intérieur du Té en dégageant au moins un orifice latéral (28), ménagé à mi-longueur du clapet et communiquant avec le centre du bouchon (12) puis de là vers la conduite d'évacuation (8). Le fluide chaud sous pression peut ainsi s'écouler par cet ou ces orifices, permettant l'abaissement de la pression du fluide à l'intérieur du Té et le dégagement ultérieur par gravité du résidu de bulbe bouchant l'évacuation centrale.

Il convient de noter également que pour éviter d'obstruer la canalisation de transport du fluide chaud par les débris du bulbe éclaté il est conseillé de munir le corps du Té (9), et à proximité de l'emboîture (10′) de sortie du fluide, d'un filtre (27) pouvant être réalisé en toute matière insensible au fluide transporté. Toutefois, dans le cas d'une utilisation du système d'écoulement en ligne sur la canalisation, c'est à dire, sans avoir recours à une dérivation, il convient de disposer autour du bulbe (19) et/ou de l'étrier (25), un manchon de protection réalisé dans une matière filtrante insensible au fluide transporté.

L'invention n'est nullement limitée au mode de réalisation décrit ci-dessus, elle en couvre également toutes les variantes comme notamment le mode de fixation du bouchon (12) dans la troisième emboîture du corps en Té (9) de la soupape qui pourra être maintenu en place par tout moyen mécanique ou par collage.

## Revendications

1. Soupape de décharge pour canalisation de transport de fluide chaud (liquide ou gazeux), disposée en aval d'un générateur à chaleur ou de tout autre dispositif transmettant volontairement ou accidentellement de la chaleur, un compresseur à air par exemple, et en amont de la partie du circuit de fluide chaud à protéger qui comprend une conduite (8) d'évacuation ou de recyclage sur laquelle est monté un corps (9) de la soupape de décharge (7), un orifice dudit corps en liaison avec ladite conduite (8) étant obstrué par un moyen (19) rempli d'un matériau pouvant se dilater sous l'effet de la montée en température du fluide véhiculé dans la canalisation et qui est disposé à l'intérieur du corps (9) afin d'être en contact avec le fluide véhiculé, caractérisée en ce que ledit moyen est constitué d'un bulbe cassable (19) rempli d'un liquide dont la dilatation lors d'une augmentation anormale de la température du fluide véhiculé produit le bris dudit bulbe, ce dernier étant monté dans un support (18) et étant calé au-dessus de l'orifice du corps (9) qu'il obstrue, entre un clapet (22) cylindrique et creux monté dans ledit orifice et rappelé par un ressort (16), et un étrier (25) monté sur ledit support (18), ledit ressort (16) n'étant pas au contact du fluide transporté.

2. Soupape suivant la revendication 1, caractérisée en ce que le corps (9) de la soupape est muni de deux emboîtures opposées (10-10') pouvant recevoir les tuyaux adjacents (5) d'un circuit de dérivation (4) relié audit circuit de fluide chaud à protéger et accueille dans ledit orifice du corps (9), ledit bulbe (19) disposé perpendiculairement à l'axe médian (A-A') passant par le centre des deux emboîtures (10-10').

3. Soupape suivant la revendication 1 ou 2, caractérisée en ce que l'orifice du corps (9) est relié à ladite conduite par un bouchon (12) collé ou vissé, traversé de part en part et en son centre par des chambres successives (14-15-17) formant canal d'évacuation vers la conduite (8).

4. Soupape suivant le revendication 3, caractérisée en ce que la chambre supérieure externe (14) du bouchon (12) constitue une emboîture femelle pour la conduite (8).

5. Soupape suivant la revendication 3 ou 4, caractérisée en ce que la chambre médiane (15) du bouchon (12) reçoit ledit ressort (16).

6. Soupape suivant la revendication 3, 4 ou 5, caractérisée en ce que la chambre inférieure interne (17) du bouchon (12) reçoit le support (18) du bulbe (19).

7. Soupape suivant l'une des revendications précédentes, caractérisée en ce que ledit clapet cylindrique creux (22) coulisse vers l'intérieur du corps (9) perpendiculairement audit axe médian (A-A'), sous l'effet du ressort (16) libéré par le bris du bulbe (19).

8. Soupape suivant la revendication 7 caractérisée en ce que l'étanchéité est assurée par deux joints (23, 24), l'un (23) assurant l'étanchéité entre le clapet (22) et l'orifice dudit corps, l'autre (24) assurant l'étanchéité entre le passage cylindrique à l'intérieur du clapet (22) et le bulbe (19).

9. Soupape suivant la revendication 7 ou 8, caractérisée en ce que le clapet cylindrique (22) comprend au moins un orifice latéral (28) ménagé à mi-longueur et permettant au fluide chaud de s'évacuer par le centre du bouchon (12) vers la conduite d'évacuation (8).

10. Soupape suivant l'une quelconque des revendications précédentes, caractérisée en ce que le corps (9) est réalisé en matière thermoplastique résistante aux hautes températures (> 60°C) tels que PVCC, PVDF, Polyéthlylène réticulé, polypropylène.

11. Soupape suivant la revendication 10, caractérisée en ce qu'un filtre (27) est disposé à proximité de l'emboîture (10') de sortie du fluide chaud.

12. Soupape suivant la revendication 10, caractérisée en ce qu'un manchon réalisé en une matière filtrante est disposé autour du bulbe (19) et/ou de l'étrier (25) du support du bulbe.

## Claims

1. Relief valve for piping systems for conveying hot fluid (liquid or gaseous), disposed downstream of a heat generator or any other device intentionally or accidentally transmitting heat, for example an air compressor, and upstream of the part of the hot fluid circuit to be protected which comprises a discharge pipe or recycling pipe (8), on which a body (9) of the relief valve (7) is mounted, an orifice of said body in communication with said pipe (8) being obstructed by a means (19) filled with a material capable of expanding under the effect of the rise in temperature of the fluid carried in the piping system and which is disposed inside the body (9) in order to be in contact with the fluid carried, characterized in that said means is constituted of a breakable bulb (19) filled with a liquid, the expansion of which during an abnormal rise in the temperature of the fluid carried causes the breakage of said bulb, the bulb being mounted in a support (18) and being chocked up above the orifice of the body (9) which it obstructs, between a cylindrical, hollow clapper (22) mounted in said orifice and biased by a spring (16), and a stirrup (25) mounted on said support (18), said spring (16) not being in contact with the fluid carried.

2. Valve according to Claim 1, characterized in that the body (9) of the valve is provided with two opposite sockets (10-10') capable of receiving the adjacent pipes (5) of a bypass circuit (4), connected to said hot fluid circuit to be protected, and houses, in said orifice of the body (9), said bulb (19), disposed perpendicularly to the median axis (A-A') passing through the centre of the two sockets (10-10').

3. Valve according to Claim 1 or 2, characterized in that the orifice of the body (9) is connected to said pipe by a glued or screwed stopper (12), traversed from one side to the other at its centre by successive chambers (14-15-17) forming a discharge duct towards the pipe (8).

4. Valve according to Claim 3, characterized in that the external upper chamber (14) of the stopper (12) constitutes a female socket for the pipe (8).

5. Valve according to Claim 3 or 4, characterized in that the median chamber (15) of the stopper (12) houses said spring (16).

6. Valve according to Claims 3, 4 or 5, characterized in that the internal lower chamber (17) of the stopper (12) houses the support (18) for the bulb (19).

7. Valve according to one of the preceding Claims, characterized in that said hollow cylindrical clapper (22) slides towards the interior of the body (9), perpendicularly to said median axis (A-A'), under the effect of the spring (16) released by the breakage of the bulb (19).

8. Valve according to Claim 7, characterized in that sealing is assured by two seals (23, 24), the one (23) assuring tightness between the clapper (22) and the orifice of said body, the other (24) assuring tightness between the cylindrical passage inside the clapper (22) and the bulb (19).

9. Valve according to Claim 7 or 8, characterized in that the cylindrical clapper (22) comprises at least one lateral orifice (28) formed at mid-length and allowing the hot fluid to discharge through the centre of the stopper (12) towards the discharge pipe (8).

10. Valve according to any one of the preceding Claims, characterized in that the body (9) is formed of a thermoplastic material resistant to high temperatures (> 60°C), such as PVCC, PVDF, cross-linked polyethylene, polypropylene.

11. Valve according to Claim 10, characterized in that a filter (27) is disposed near the outlet socket (10') for the hot fluid.

12. Valve according to Claim 10, characterized in that a sleeve formed of a filtering material is disposed around the bulb (19) and/or the stirrup (25) of the support for the bulb.

## Patentansprüche

1. Druckentlastungsventil für eine Rohrleitung zum Transport von flüssigem oder gasförmigem heißem Fluid, wobei das Ventil in Strömungsrichtung nach einem Wärmegenerator oder einer beliebigen anderen, beabsichtigt oder zufällig Wärme übertragenden Vorrichtung, wie z.B. einem Luftkompressor, und vor dem zu schützenden Teil der Heißfluidleitung angeordnet ist, der eine Ablaß- oder Rückfuhrleitung (8) aufweist, auf der ein Körper (9) des Druckentlastungsventils (7) angebracht ist, wobei eine mit der Leitung (8) in Verbindung stehende Öffnung des Körpers durch eine Einrichtung (19) verschlossen ist, die mit einem Material, das sich bei einem Anstieg der Temperatur des in der Leitung beförderten Fluids ausdehnen kann, gefüllt ist, und die im Inneren des Körpers (9) angeordnet ist, damit sie mit dem beförderten Fluid in Kontakt steht, **dadurch gekennzeichnet**, daß die Einrichtung aus einem zerbrechlichen Ampullenkörper (19) besteht, der mit einer Flüssigkeit gefüllt ist, deren Ausdehnung bei einer anormalen Zunahme der Temperatur der beförderten Flüssigkeit den Bruch des Ampullenkörpers verursacht, wobei letzterer in einer Halterung (18) angebracht ist und über der Öffnung des Körpers (9), die er verschließt, zwischen einem in der Öffnung angebrachten und durch eine Feder (16) vorgespannten zylindrischen, hohlen Schließkörper (22) und einem auf der Halterung (18) angebrachten Bügel (25) verklemmt ist, wobei die Feder (16) nicht mit der transportierten Flüssigkeit in Kontakt ist.

2. Ventil nach Anspruch 1, dadurch gekennzeichnet, daß der Körper (9) des Ventils mit zwei sich gegenüberliegenden Einstecköffnungen (10, 10') zur Aufnahme der angrenzenden Rohre (5) einer mit der zu schützenden Heißfluidleitung verbundenen Nebenleitung (4) versehen ist und in der Öffnung des Körpers (9) den Ampullenkörper (19) aufnimmt, der senkrecht zu der durch das Zentrum der beiden Einstecköffnungen (10, 10') verlaufenden Mittelachse (A-A') angeordnet ist.

3. Ventil nach Anspruch 1 oder 2, dadurch gekennzeichnet, daß die Öffnung des Körpers (9) mit dieser Leitung mittels eines eingeklebten oder eingeschraubten Stopfens (12) verbunden ist, der durchgehend von einer Seite zur anderen und mittig von aufeinanderfolgenden Kammern (14, 15, 17) durchgriffen wird, die einen Ablaßkanal zur Leitung (8) bilden.

4. Ventil nach Anspruch 3, dadurch gekennzeichnet, daß die äußere, obere Kammer (14) des Stopfens (12) eine Einstecköffnung für die Leitung (8) bildet.

5. Ventil nach Anspruch 3 oder 4, dadurch gekennzeichnet, daß in der mittleren Kammer (15) des Stopfens (12) die Feder (16) angeordnet ist.

6. Ventil nach Anspruch 3, 4 oder 5, dadurch gekennzeichnet, daß in der inneren, unteren Kammer (17) des Stopfens (12) die Halterung (18) für den Ampullenkörper (19) Aufnahme findet.

7. Ventil nach einem der vorhergehenden Ansprüche, dadurch gekennzeichnet, daß der hohle zylindrische Schließkörper (22) senkrecht zur Mittelachse (A-A') in das Innere des Körpers (9) gleitet, und zwar durch Einwirkung der Feder (16), die durch den Bruch des Ampullenkörpers (19) freigegeben wird.

8. Ventil nach Anspruch 7, dadurch gekennzeichnet, daß die Dichtheit durch zwei Dichtungen (23, 24) gewährleistet wird, von denen die eine (23) die Dichtheit zwischen dem Schließkörper (22) und der Öffnung des Körpers und die andere (24) die Dichtheit zwischen dem zylindrischen Durchgang im Inneren des Schließkörpers (22) und dem Ampullenkörper (19) gewährleistet.

9. Ventil nach Anspruch 7 oder 8, dadurch gekennzeichnet, daß der zylindrische Schließkörper (22) wenigstens eine, auf halber Höhe angeordnete seitliche Öffnung (28) aufweist, durch die das heiße Fluid durch die Mitte des Stopfens (12) hindurch zur Ablaßleitung (8) entströmen kann.

10. Ventil nach einem der vorhergehenden Ansprüche, dadurch gekennzeichnet, daß der Körper (9) aus gegenüber hohen Temperaturen (> 60 °C) resistentem thermoplastischem Material wie etwa PVCC, PVDF, vernetztem Polyäthylen, oder Polypropylen gebildet ist.

11. Ventil nach Anspruch 10, dadurch gekennzeichnet, daß nahe der Einstecköffnung (10') für den Austritt des heißen Fluids ein Filter (27) angeordnet ist.

12. Ventil nach Anspruch 10, dadurch gekennzeichnet, daß um den Ampullenkörper (19) und/oder um den Bügel (25) der Halterung des Ampullenkörpers herum eine Manschette aus Filtermaterial angeordnet ist.
